# EUROPEAN PATENT APPLICATION

(11) **EP 0 920 198 A1**
(43) Date of publication of application: **02.06.1999**
(21) Application number: 98902233.0
(22) Date of filing: 16.02.1998
(51) Int. Cl.: H04N 5/76, G02B 3/00, B26D 3/00, B42D 15/10

(54) **MOVING PICTURE CARD PRODUCING APPARATUS AND STORAGE MEDIUM FOR THE APPARATUS**

(30) Priority: 17.02.1997 JP 31575/97; 18.09.1997 JP 272266/97
(71) Applicant: SEGA ENTERPRISES, LTD., Tokyo 144-8531 (JP)
(72) Inventor: DOTE, Shingo, Sega Enterprises, Ltd., Tokyo 144-8531 (JP); ITOH, Futoshi, Sega Enterprises, Ltd., Tokyo 144-8531 (JP); WATANABE, Shinji, Sega Enterprises, Ltd., Tokyo 144-8531 (JP); YAMADA, Masayoshi, Sega Enterprises, Ltd., Tokyo 144-8531 (JP)
(74) Representative: Billington, Lawrence Emlyn
(86) International application number: JP9800615
(87) International publication number: WO9836565

(57) **Abstract**

Disclosed is a moving image card generation apparatus which automatically issues a card on which moving images are printed. Such a moving image card generation apparatus includes: storage media storing a program for generating a moving image card and moving image data for a plurality of frames which serve as background images; input device with which an operator selects and inputs image data for one of a plurality of frames; photographic device; control device reading from the storage media the program for generating a moving image card and for executing the program, and synthesizing an image generated by the photographic device with a frame having a plurality of scenes which is selected by the input device, in order to create synthesized images for the plurality of scene images; and a moving image printer forming into strips the synthesized images for the plurality of scenes and for alternately printing the strips on the reverse surface of a lenticular lens. Furthermore, the structure which forms a cut in a moving image card in order to easily separate small pieces of photographed images includes: a card tray on which a card having a predetermined shape is mounted; a cut forming unit having cutting blades; and a control unit for detecting the insertion of the card tray into the cut forming unit and for, in order to cut the card, moving the cutting blades nearer each other than a distance which is equivalent to the thickness of the card mounted on the card tray.

## Description

### FIELD OF THE INVENTION

The present invention relates to a moving image employing a lenticular sheet, a moving image card generation apparatus, and a storage medium employed therefor. In addition, the present invention pertains to a cut forming method and a cut forming device for forming cuts in a thick sheet made of a synthetic resin, for example, so that obtaining separate, individual moving image cards is easy.

### BACKGROUND OF THE INVENTION

Recently popular are photographic images which are so composed that they appear to have been taken in the sense of a game. These images are printed on sheets and output quickly for customers who either exchange them with other persons, or store them as mementos. Currently, there is a large demand for apparatuses that can automatically generate and sell such photographic seals.

However, a conventional photographic seal generation apparatus merely provides for a customer a single sheet on which are printed a plurality of small, separable seals bearing the same static image.

And as a result of the increase in the popularity of multimedia techniques in society in general, it may be difficult to maintain the interest of young people by employing photographic seal generation apparatuses which provide a sheet on which only static images are printed. Therefore, there is an increasing demand for a product which can supply a simple, easily produced form which is capable of attracting and holding the interest of young people.

### DISCLOSURE OF THE INVENTION

Taking this point of view, it is one objective of the present invention to make available a moving image card generation apparatus for automatically issuing a card on which moving images are printed, a storage medium employed therefor, and a moving image generation method.

It is another objective of the present invention to make available a moving image card generation apparatus which can be operated by a customer, i.e., which can be operated by a customer who can easily obtain satisfactory moving images, a storage medium employed therefor, and a moving image card generation method.

It is an additional objective of the present invention to make available a moving image card generation apparatus which can print a moving image on a portable card which it provides a customer.

It is a further objective of the present invention to make available a cut forming method and a cut forming device for using a lenticular lens sheet to form the above described card and for making it easy to separate the sheet into individual moving image cards.

To achieve the above objectives, according to the present invention the basic structure of a moving image card generation apparatus comprises:
storage device for storing a program for generating a moving image card and moving image data for a plurality of frames;
input device with which an operator can select and input image data for one of the plurality of frames;
digital image generator;
control device for reading the program for generating a moving image card from the storage device and for executing the program, and for synthesizing an image generated by the digital image generator with a plurality of scenes, which constitutes the image data for the selected frame, to create synthesized images for the plurality of scene images; and
output device for forming into strips the synthesized images for the plurality of scenes and for alternately arranging the strips on the reverse surface of a lenticular lens to create the moving image card. With this arrangement, an apparatus according to the present invention for creating a moving image card can be implemented.

The moving image card generation apparatus according to the above aspect of the present invention includes a printer for printing, directly on the reverse surface of the lenticular lens, the strips of the synthesized images for the plurality of scenes which are alternately arranged. Since the strips of the alternately arranged synthesized images are printed directly on the reverse surface of the lenticular lens, a small number of procedures will suffice for the generation of a thin moving image card.

As another configuration, the strips of the synthesized images for the plurality of alternately arranged scenes are printed on a specific sheet, and the resultant sheet is aligned with the reverse surface of the lenticular lens to create the moving image card. When the strips of the alternately arranged synthesized images are printed on a sheet other than the lenticular lens, a special printer for printing images on the reverse surface of the lenticular lens is not required.

Furthermore, to achieve the above objectives, a cut forming device comprises:
a card tray on which a card having a predetermined shape is mounted;
a cut forming unit having cutting blades; and
a control unit for detecting the insertion of the card tray into the cut forming unit and for cutting the card mounted on the card tray by moving the cutting blades nearer each other than a distance equivalent to the thickness of the card.

As one aspect, the cutting blades comprise an upper blade and a lower blade which face each other vertically. In addition, the shortest distance from the upper blade to the facing lower blade of the cut forming unit, with the card mounted on the card tray positioned in between, is approximately 0.1 mm.

When the above described cut forming device is applied for the moving image card generation apparatus of the present invention, it is possible to produce a cut forming device which can sort and print photographic images in small subdivisions of a card and can form cuts in the card so that the individual subdivisions can be separated easily, and to provide a moving image card apparatus which incorporates such a cut forming device.

Other objectives and features of the present invention will become apparent during the course of the detailed explanation of the embodiments of the present invention which will be given while referring to the following drawings.

### BRIEF DESCRIPTION OF THE DRAWINGS

Fig. 1 is an external view of a moving image card generation apparatus according to one embodiment of the present invention;
Fig. 2 is a block diagram illustrating an example arrangement for the moving image card generation apparatus in Fig. 1;
Fig. 3 is a block diagram illustrating an example arrangement for a circuit board of the moving image card generation apparatus;
Fig. 4 is a diagram illustrating an example arrangement for a memory cartridge employed as a storage medium;
Figs. 5A, 5B and 5C are diagrams for explaining the operation of a lenticular lens used for the present invention;
Figs. 6A to 6D are diagrams for explaining the principle for the generation of a moving image card according to the present invention;
Figs. 7A and 7B are diagrams for explaining the operation of a printer used for a sheet having a lenticular lens which is used for the present invention;
Fig. 8 is a diagram for explaining the printing state using the printer in Figs. 7A and 7B;
Fig. 9 is a flowchart showing the processing performed by the moving image card generation apparatus according to the present invention;
Fig. 10 is a diagram for explaining a frame selection step in the flowchart in Fig. 9;
Figs. 11A to 11F are diagrams showing example moving image frames;
Figs. 12A to 12F are diagrams showing other example moving image frames;
Fig. 13 is a diagram showing a reproduction screen for a selected moving image frame;
Figs. 14A to 14C are diagrams showing example start messages displayed for image fetching (step S4) according to the flowchart in Fig. 9;
Figs. 15A and 15B are diagrams depicting screens on a display during the image fetching process performed in accordance with the start message in Fig. 14A;
Figs. 16A and 16B are diagrams depicting screens on a display which are shown as a result of the image fetching process performed in accordance with the start message in Fig. 14A;
Figs. 17A to 17D are enlarged diagrams of the screen in Fig. 16B;
Fig. 18 is a diagram depicting a screen on a display during the image fetching process performed in accordance with the start message in Fig. 14B;
Fig. 19 is a perspective view of the external appearance of a moving image card generation apparatus according to another embodiment of the present invention;
Fig. 20 is a plan view of one example moving card which is generated by the moving image card generation apparatus according to the present invention;
Fig. 21 is a block diagram illustrating an example arrangement for the moving image card generation apparatus shown in Fig. 19;
Fig. 22 is a plan view of a moving image card in which cuts have been formed;
Fig. 23 is a diagram for explaining the state wherein a plurality of seals have been separated, along the cuts, from the moving image card;
Fig. 24 is a schematic side view of an example cut forming device for forming a cut in a moving image card;
Fig. 25 is a diagram for explaining the principle for the forming of a cut using the cut forming device in Fig. 24;
Fig. 26 is a schematic side view of another example cut forming device for forming a cut in a moving image card;
Fig. 27 is a diagram for explaining the principle for the forming of a cut using the cut forming device in Fig. 26;
Fig. 28 is a block diagram illustrating the control system provided in the cut forming device;
Fig. 29 is a flowchart showing the processing performed by the cut forming device;
Figs. 30A to 30C are diagrams for explaining an example card slot mechanism for the insertion of a card which is fed to the cut forming device employed by the moving image card generation apparatus in Fig. 19;
Fig. 31 is a schematic perspective view of an example internal mechanism for the cut forming device;
Fig. 32 is a detailed side view of the internal mechanism of the cut forming device in Fig. 31;
Fig. 33 is a detailed top view of the internal mechanism of the cut forming device in Fig. 31;
Fig. 34 is a detailed front view of the internal mechanism of the cut forming device in Fig. 31;
Fig. 35 is a schematic perspective view of another example internal mechanism for the cut forming device; and
Fig. 36 is a detailed top view of the internal mechanism of the cut forming device in Fig. 35.

### DETAILED DESCRIPTION OF THE PREFERRED EMBODIMENTS

The embodiments of the present invention will now be described while referring to the accompanying drawings. The same reference numerals or symbols are used throughout to denote corresponding or identical components in the drawings.

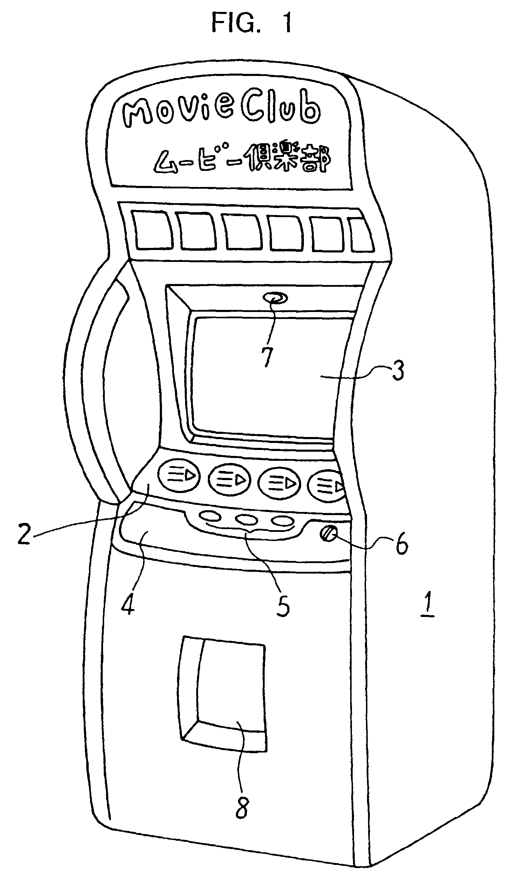

Fig. 1 is a diagram showing the external appearance of a moving image card generation apparatus according to the present invention. A front display panel 2 on which is displayed operating guidance for the moving image generation apparatus is provided for a main body 1 of the apparatus.

The moving image card generation apparatus further includes a display screen 3, provided upright and rising from the front display panel 2, and an operating panel 4, on which are provided buttons 5 for entry and confirmation and a coin slot 6. In addition, a camera 7 is located above the display screen 3, and a moving image card discharge port 8 is positioned in the lower front portion for the discharge of a moving image card which has been generated.

As will be described later, in the standby state, an advertisement is repetitively displayed on the display screen 3. When coins having a specified total value are inserted into the coin slot 6 by an operator, the advertisement on the display screen 3 is erased and is replaced by a display which is employed in the selection of a frame for a moving image card.

The operator, who is a customer, thereafter employs the input and confirmation buttons 5 to select and enter a frame layout for a moving image card. Then, the picture of the operator is taken by the camera 7, the operator confirms the obtained image and the moving image card is printed. And finally, the printed moving image card is discharged at the moving image card discharge port 8. The details of this operation will be explained later while referring to the arrangement of the circuit board in the apparatus.

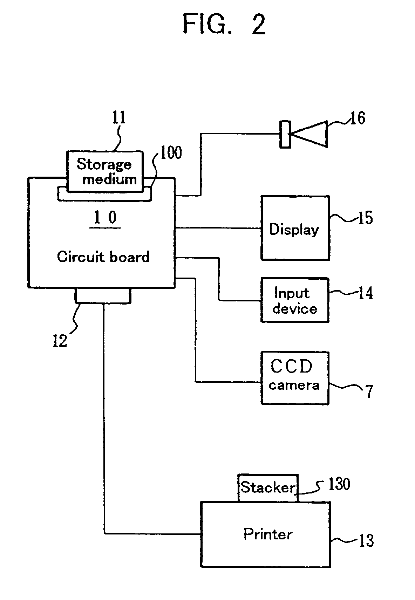

Fig. 2 is a block diagram illustrating an example arrangement for the moving image card generation apparatus in Fig. 1. A circuit board 10 is stored in the main body 1 of the moving image card generation apparatus. A memory cartridge 11, a storage medium in which are stored a program and data for generating a moving image card, is detachably inserted into the circuit board 10.

A moving image card printer 13 is connected to the apparatus via an interface circuit 12. Attached to the moving card printer 13 is a stacker 130 in which is stored a plurality of transparent, card-shaped hard plastic sheets on the obverse surface of which a lenticular lens is provided and on the reverse surface of which a moving image can be printed.

The cards held in the stacker 130 are fed to the printer 13 one by one, and on the reverse surface of each such card a moving image is printed using a method to be described later.

The input and confirmation buttons 5, the display 15 and the camera 7 for taking customers' pictures are connected, as one part of an input device 14 which is described while referring to Fig. 1, to the circuit board 10 of the main body. In addition, a loudspeaker 16 for providing audio guidance can be connected to the circuit board 10 as needed.

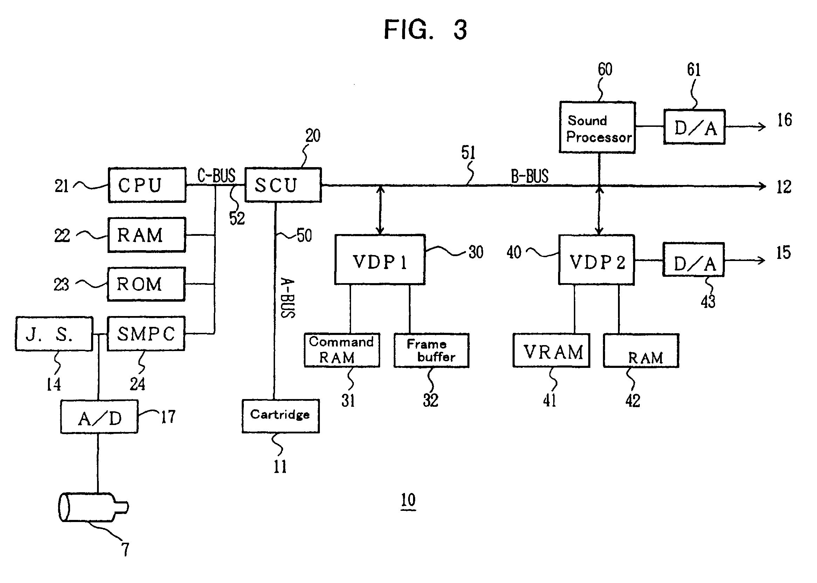

An example arrangement for the circuit board 10 is shown in Fig. 3. The input device 14 in Fig. 2 includes the input and confirmation buttons 5 in Fig. 1, which are input devices with which a customer can select a frame and can confirm an image to be reproduced.

The input device 14 is connected to the circuit board 10 and is located in the operating panel 4 (see Fig. 1). The input device 14 is connected to a C-BUS 52 on the circuit board 10 via an SMPC (System Manager & Peripheral Control), which serves as an I/O controller. The SMPC 24 performs a reset management function for the moving image card generation apparatus and performs an interface function for an external device, such as the input device 14.

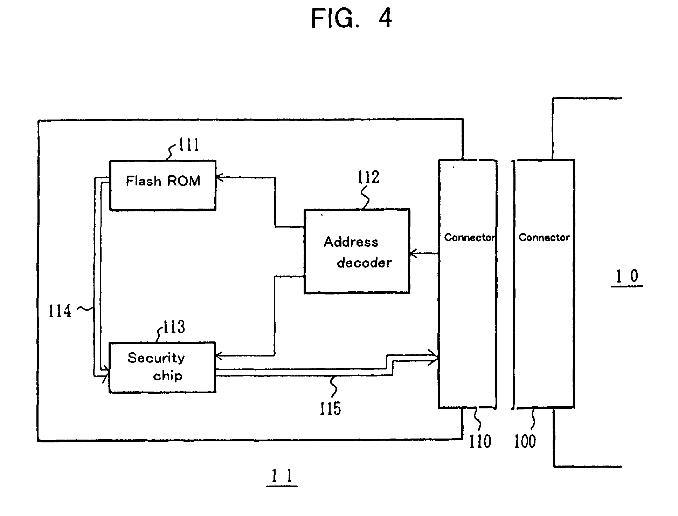

A connector socket 110 for the memory cartridge 11, which is an example storage medium, is detachably coupled with a connector 100 for the circuit board 10. An example arrangement for the memory card 11 is shown in Fig. 4. And as is shown in Fig. 4, the memory cartridge 11 includes a flash ROM 111, a storage device.

In the flash ROM 111 are stored a program for generating a moving image card, and pattern data which correspond to a plurality of frames which constitute the backgrounds employed for the moving image cards.

The data in the flash ROM 111 are read using an address which is obtained by decoding an address signal received from the circuit board 10 decoder 112.

The program data stored in the flash ROM 111 are scrambled for security. Therefore, the scrambled data read from the flash ROM 111 are transmitted by a bus 114 to a security check chip 113. The data are decoded (descrambled) and the resultant data are output to the circuit board 10 via a bus 115.

A memory cartridge, which is detachable from the moving image card generation apparatus, is employed as a storage medium for the program for generating a moving image card and for moving image data for a plurality of frames. The present invention, however, is not limited to the use of this memory cartridge.

That is, a memory device fixed to the main body, such as a personal ROM or a hard disk, or a storage disk, such as a floppy disk or a compact disk, can be employed. In addition, program data may be acquired which are transmitted using wire or wireless communication device.

An explanation will be given while again referring to Fig. 3. In Fig. 3, connected to the C-BUS 52 are a CPU 21, a RAM 22 and a ROM 23, as well as the SMPC 24.

In addition, connected to the SMPC 24 at the same location as the input device 14 is an analog/digital converter 17 which converts into a digital signal an analog video signal obtained by the camera 7.

The CPU 21 reads and executes a moving image card generation program stored in the flash ROM 111 in the memory cartridge 11, and provides control for the entire moving image card generation apparatus. The CPU 21 is a high-speed, 32 bit RISC processor, for example.

A system controller 20 includes a DMA (Dynamic Memory Access) controller and an interrupt controller, and serves as a co-processor for the CPU 21.

A sound processor 60 controls sound production (PCM/FM), converting digital signals received from the D/A converter 61 into analog signals, and releasing to operators, via a loudspeaker 16, sounds or music required for the utilization of the moving image card generation apparatus.

Connected to a B-BUS 51 on the circuit board 10 are not only the system controller 20 and the sound processor 60, but also a first video display processor (VDP1) 30, for extracting from an obtained moving image signal a moving image signal which is displayed under the control of the CPU 21 and for providing a digital display, and a second video processor (VDP2) 40, for stabilizing a background image, i.e., a frame image, relative to a displayed moving image, and for scrolling it, such as by rotating it or moving it vertically or horizontally.

A command RAM 31 (a DRAM, for example) and two frame buffer memories 32 (which, for example, have memory capacities of 2 M bits each) are connected to the first video display processor (VDP1) 30. The first video display processor 30, the command RAM 31 and the frame buffer memory 32 constitute a first image information processor for performing image processing and displaying a moving image of a customer, i.e., an operator whose picture is taken by the camera 7.

It should be noted that, according to the subject of the present invention, a moving image consists of a sequence of a plurality of static images, as will be described later (in this embodiment, static images for six scenes are sequentially aligned).

The first video display processor 30 is mounted on a semiconductor chip as an IC chip.

Command data originating at the CPU 21 and moving image data for six scenes, which are extracted from image data obtained by the camera 7, are stored in the command RAM 31. The processing performed for photographing a customer, for extracting moving images for six scenes from the obtained image signals, and for reproducing a moving image for confirmation is executed by the CPU 21 in accordance with the moving image card generation program stored in the flash ROM 111 in the memory cartridge 11, which, as was previously explained, is a storage medium.

That is, a command in the moving image card generation program is temporarily stored in the RAM 22, and, as the moving image card generation process is performed, is transferred to the command RAM 31 by the CPU 21.

In accordance with the data transmitted to the command RAM 31, the moving image data extracted for six scenes are developed in the frame buffer 32. The first video display processor 30 sequentially reads image data for one frame written in the frame buffer 32, and transmits the image data to the second video display processor 40.

The second video display processor 40, a VRAM 41 and a color RAM 42 constitute the second image information processor which performs the image processing for a frame screen which serves as the background image.

The second video display processor 40, as well as the first video display processor 30, is formed on a semiconductor chip. The second video display processor 40 incorporates a register (not shown) in which are held data for generating image data, and is connected to the color RAM 42, which has a predetermined memory capacity and which is used for the recording of color code, and the VRAM 41.

The second video display processor 40 reads data from the VRAM 41 in accordance with the setting for the incorporated register (not shown), determines a preference in accordance with the setting for the image data register of the frame screen, and generates image display data.

The obtained image display data are converted into display color data, and are further converted by a D/A converter 43 into analog signals which are then transmitted to a display device 15. The image display data are stored in the VRAM 41 and the color RAM 42 via the system controller 20. These data, which are used for displaying a frame image, are stored in the VRAM 41 and the color RAM 42, and are also stored in the flash ROM 111 in the memory cartridge 11.

The VRAM 41 is divided into two frames having the same memory capacity. In each frame are stored pattern data, which are data for cells of 8 x 8 pixels, and pattern name data (an address indicating a pattern data storage position in the color RAM 42) specifying a cell to be used, which is defined in the color RAM 42, in correspondence with the position of a cell in a block of m x n cells which are so distributed as to constitute a background image for one frame.

Therefore, synthesization of the foreground image data, which are received as moving image data from the first video display processor 30, and the background image data, which are received as frame image data from the second display processor 40, is performed to obtain the above described image display data.

An explanation will now be given for a card used for the moving image card generation apparatus 1 of the present invention and the moving image printer 13.

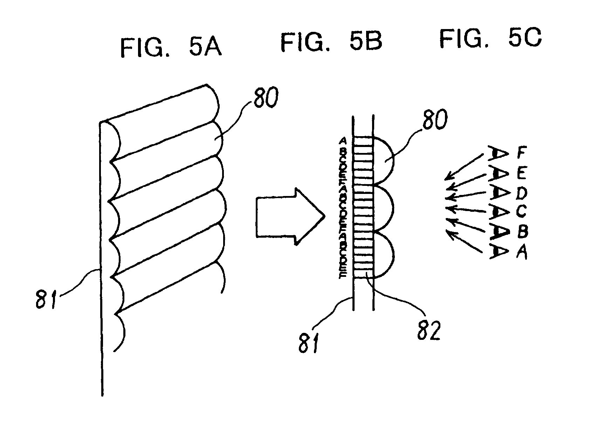

Figs. 5A to 5C are diagrams for explaining the moving image display principle employed with a card used by the moving image card generation apparatus 1 of the present invention. Fig. 5A is an enlarged diagram of one part of a card sheet. The card sheet is prepared by forming lenticular lens strips 80 on the obverse surface of a card-shaped plastic plate, the reverse side of which is a flat print surface.

Fig. 5B is a cross-sectional view of a card sheet. In this embodiment, the area of a single lenticular lens strip 80 is divided into six segments, each of which has a width 82. Assuming that the segments are A through F, as is shown in Fig. 5C, they can sequentially be observed from different viewing locations. Or, when the viewing location is fixed and the card is alternately displaced in the direction of its top and in the direction of its bottom, the segments A through F can be observed sequentially.

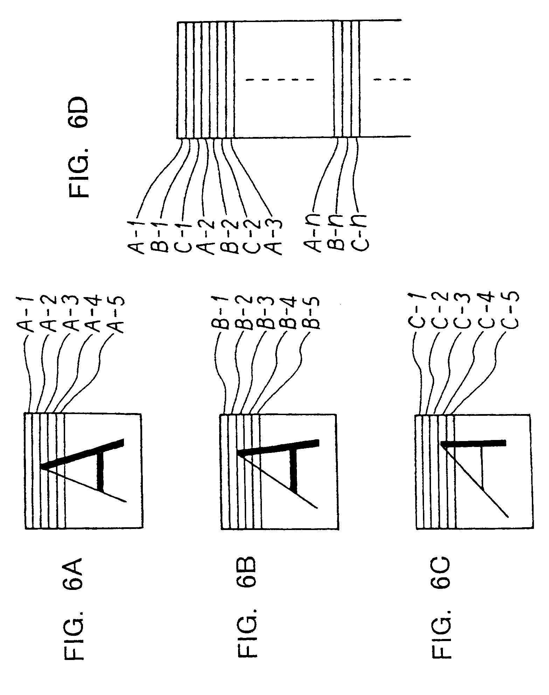

As is shown in Figs. 6A to 6D, assume, for simplicity, there are three scenes (Figs. 6A to 6C) which are sequentially changed. The images in the three scenes (Figs. 6a to 6C) are those for a gradually changing letter "A". The image in Fig. 6a is divided into strips A1 to Ai, the image in Fig. 6B is divided into strips B-1 to B-i, and the image in Fig. 6C is divided into strips C-1 to C-i.

Then, as is shown in Fig. 6D, the strips for the three scene images (Figs. 6A to 6C) are arranged in the order of their first strips A-1, B-1 and C-1, the second strips A-2, B-2 and C-2, . . ., and the n-th strips A-n, B-n and C-n, and are printed on the reverse surface of the card sheet.

As a result, as was explained while referring to Figs. 5A to 5C, the images for six scenes (Figs. 6A to 6C) can be sequentially observed from different viewing locations, or by alternately displacing the card in the direction of its top and in the direction of its bottom, an observer can view a moving image that changes from Fig. 6A to Fig. 6C, and conversely, from Fig. 6C to 6A.

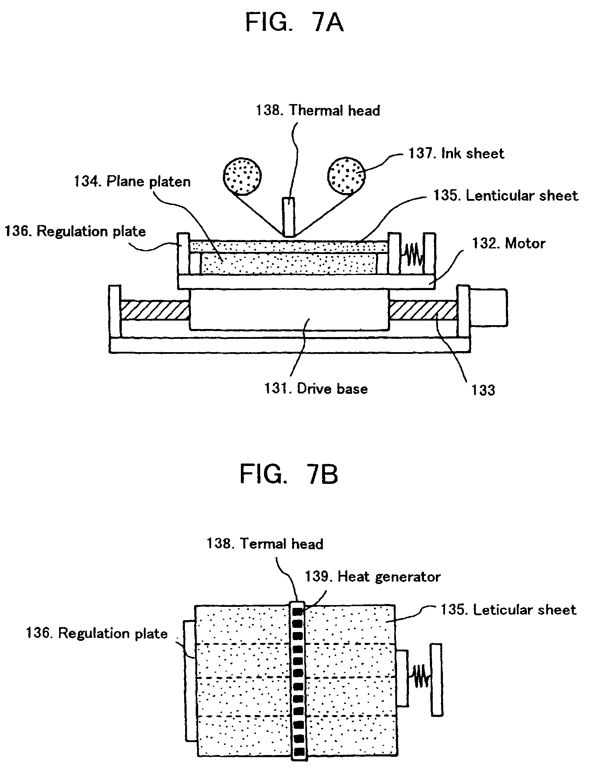

Figs. 7A and 7B are schematic diagrams showing an example of the printer 13 used by the moving image card generation apparatus of the present invention. Fig. 7A is a transverse side view and Fig. 7B is a top view. A plane platen 134 is mounted on a drive table 131 which is moved in the axial direction as a screw-thread shaft 133 is rotated, and a lenticular card sheet 135 is mounted with its reverse surface up.

The lenticular sheet 135 is correctly positioned on the plane platen 134 by a control plate 136. In addition, a thermal head 138 is so provided that it contacts the reverse surface of the lenticular sheet 135 when it is mounted on the plane platen 134. An ink sheet 137 is sandwiched between the thermal head 138 and the lenticular sheet 135.

As is shown in Fig. 7B, included in the thermal head 138 is a heat generator 139 which generates heat upon receipt of a signal output in accordance with image data to be printed. Sublimable heat-transfer ink is employed for the ink sheet 137. Therefore, printing is effected by the transfer to the lenticular sheet 135 of ink on a portion of the ink sheet 137 which is heated by the heat generator 139.

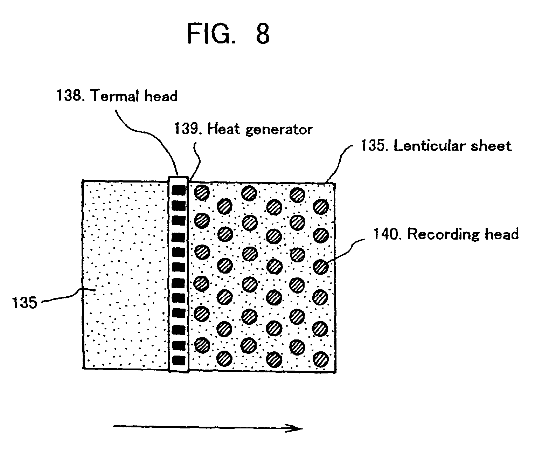

Fig. 8 is a diagram showing such an ink transfer state. As a motor 132 in the printer 13 rotates, it turns the screw-thread shaft 133 and the drive table 131 is driven along the shaft 133. As a result, as is indicated by an arrow in Fig. 8, the lenticular sheet 135 is displaced relative to the thermal head 138.

Thus, ink is sequentially transferred from the ink sheet 137, and recording dots 140 are printed on the lenticular sheet 135 to form an image thereon.

In Fig. 8, in order to Improve the resolution, a signal corresponding to an image to be printed is so transmitted to the thermal head 138 that the recording dots 140 are deposited in a zigzag pattern.

In the above embodiment, an image is directly printed on the reverse surface of a lenticular sheet 135 by the printer 13 shown in Fig. 7. The creation of cards by the present invention, however, is not limited to this embodiment.

That is, instead of printing on the reverse surface of a lenticular sheet 135, images for a plurality of scenes can be combined in strips and printed in the above described manner on a predetermined sheet other than a lenticular sheet 135, and the resultant sheet can be bonded to the reverse face of the lenticular sheet 135 to provide a moving image card.

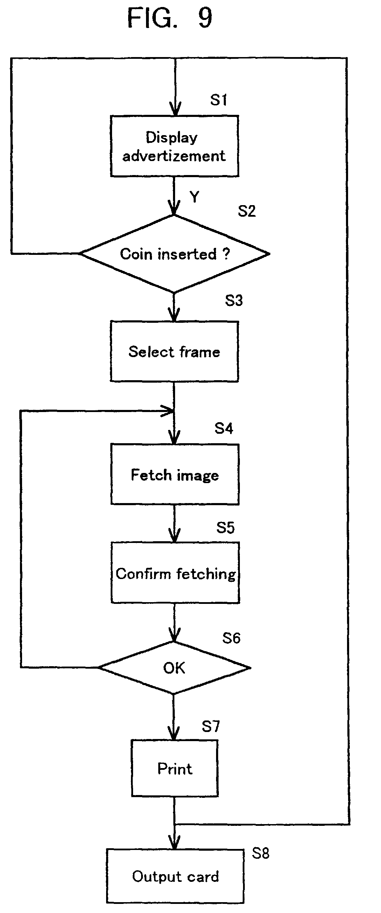

An explanation will now be given for an example operation performed by the moving image card generation apparatus of the present invention having the above described arrangement. Fig. 9 is a flowchart showing example processing performed by the moving image card generation apparatus of the present invention.

This processing is controlled by the CPU 21 in accordance with program data stored in the flash ROM 111 incorporated in the memory cartridge 11 which is used as a storage medium.

The moving image card generation apparatus repetitiously displays an advertisement on the display screen 3 while card generation is not being performed (step S1). When the apparatus detects that a customer, i.e., an operator, has inserted in the coin slot 6 coins having a predetermined total value (step S2), the advertisement is erased and is replaced by a display for selecting a frame for a moving image card (step S3).

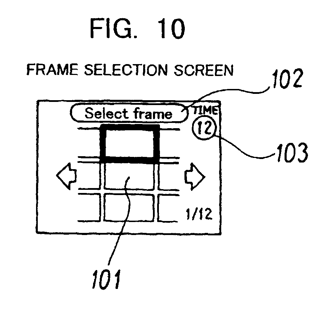

To display the frame selection screen, the CPU 21 reads frame image data from the flash ROM 111 of the memory cartridge 11, and transmits them to the video RAM 41 connected to the second video display processor 40, which has been explained while referring to Fig. 3. Then, the second video display processor 40 displays on the display screen 3 the frame selection screen, so that the operator can select one of frames. An example display is shown in Fig. 10.

Upon the depression of the input and the confirmation buttons 5, the display is scrolled in the directions indicated by right and left arrows on the screen, and a plurality of frame image samples are displayed. That is, sample frame images 101 are scrolled and displayed as background images to be controlled by the previously mentioned second video display processor 40.

In addition, a message 102 is displayed as needed, which permits an operator to select for a moving image card one of the sample frame images 101 on the screen.

In Fig. 10, a clock 103 indicates the time remaining (in seconds) for selecting a sample frame to be displayed, and this display is used to notify an operator of selection and input time limits. Since the time required for the generation of a moving image card can be reduced, the operating rate of the apparatus can be improved.

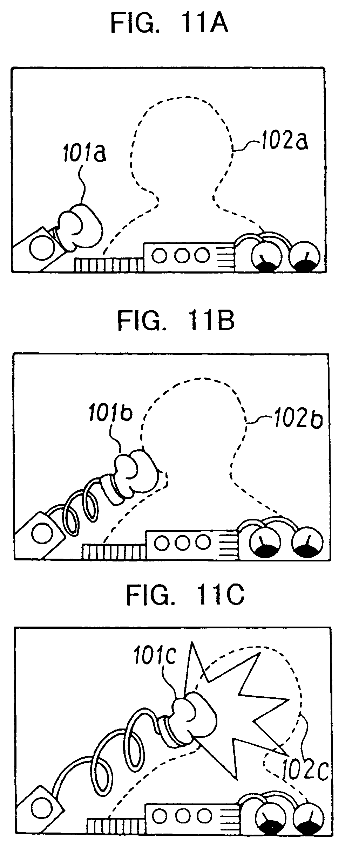

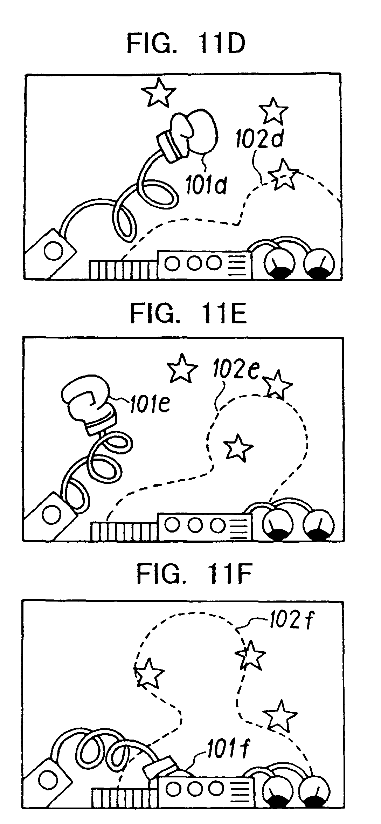

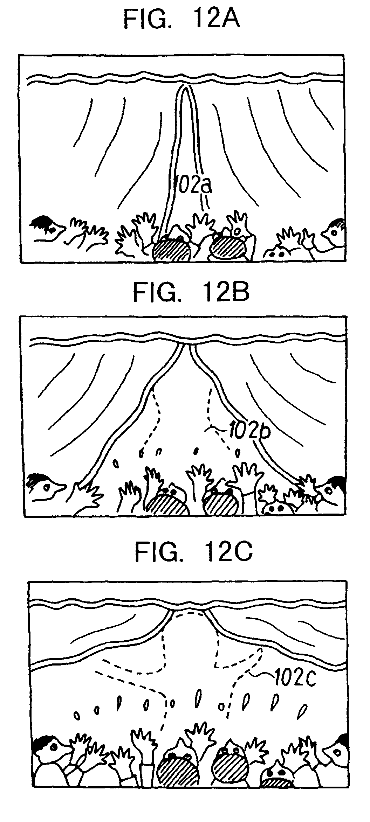

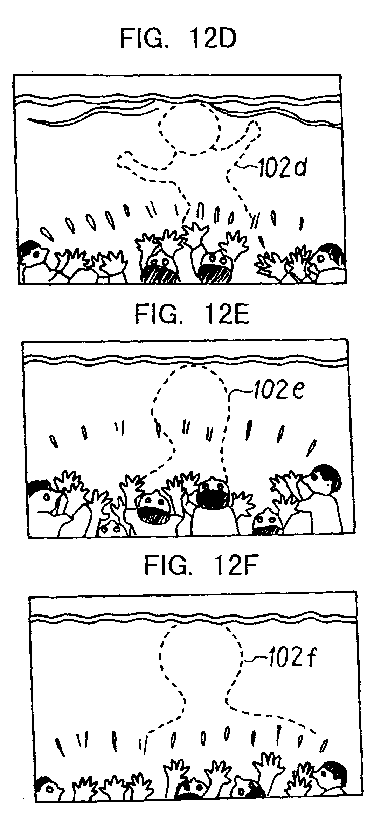

In this invention, the frame for the moving image card is a background moving image frame into which a picture of a customer, i.e., an operator, is fitted. For example, in Figs. 11A to 11F and Figs. 12A to 12F are shown example background images for a frame which is selected and displayed on the screen 3 during the moving image card generation processing.

In the background moving images in Figs. 11A to 11F, a boxing glove 101a is extended by a spring, hits the face of the operator in the moving images 102a to 102f and rebounds. In Figs. 12a to 12F, a display in which a theater screen is raised is employed as a background moving image frame, and moving images 102a to 102f of the operator are sequentially displayed.

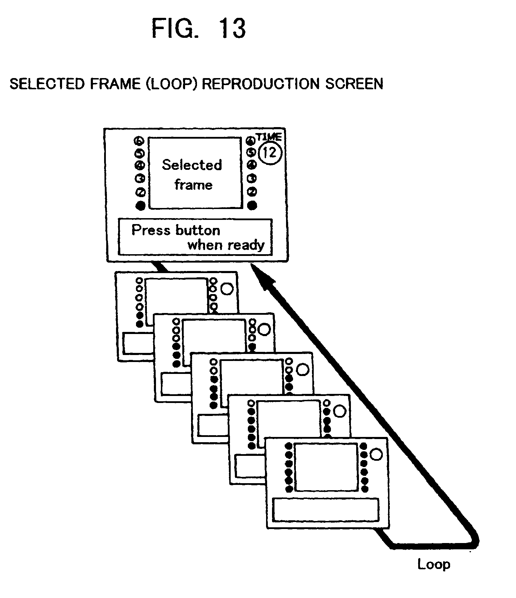

The operator selects one of the frames using the input and confirmation buttons 5. When the frame is selected, moving images (consisting of six scenes as is shown in Figs. 11A to 11F or Figs. 12A to 12F) for a selected frame are reproduced in a loop as is shown in Fig. 13. Thus, the operator can confirm the moving images for the selected frame.

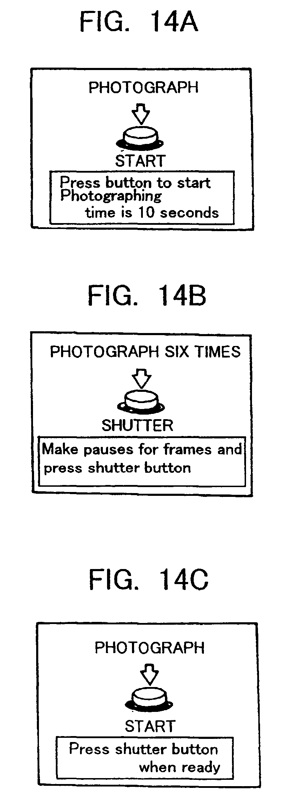

Referring again to Fig. 9, when a frame has been selected at step S3, a screen is displayed to instruct the customer, i.e., the operator, to photograph his or her moving image (step S4). Example screens for instructing the fetching of moving images are shown in Figs. 14A to 14C. The screen for instructing the fetching of moving images differs, as is shown in Figs. 14A to 14C, depending on three example methods which will be described below.

The display in Fig. 14A is provided by a method whereby an operator determines which six scenes, of a series of sequential images photographed during a specific period, are to be fetched.

The display in Fig. 14B is provided by a method whereby an operator initiates a pause for each of six scenes and photographs himself or herself by depressing a shutter button (the input and confirmation buttons 5, or an input button (not shown) projecting from the apparatus, a pedal which is additionally provided at the lower portion of the apparatus, or a handy switch on a cable which can be pulled out of the apparatus, all of which device are provided in order to facilitate the manipulation by an operator who initiates a pause).

The display in Fig. 14C is provided by a method whereby synthesization of the image of the operator with a series of sequential movements is performed at a speed corresponding to the speed at which the animation depicted in a frame is changed (e.g., the movements of the boxing glove in the six scenes displayed in Figs. 11A to 11F), and the resultant image is displayed.

Since the result by using any of these image fetching methods can be confirmed by the loop reproduction in Fig. 13 of the moving images in the selected frame, the operator can initiate a pause which fits the frame images.

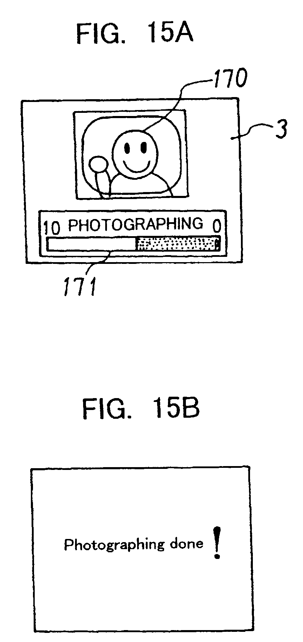

Figs. 15A and 15B are diagrams for explaining the fetching method corresponding to the display in Fig. 14A. In Fig. 15A, an image 170 obtained by the camera 7 is displayed in real time over a selected frame (behind the frame image) on the screen 3. At the same time, a belt graph 171 indicating the time remaining for taking photographs is displayed on the screen 3.

Upon observing the time remaining for taking photographs, the operator can alter a pause he or she has initiated. In Fig. 15B, when the time remaining for taking photographs has expired, a photograph time end message is displayed on the screen 3.

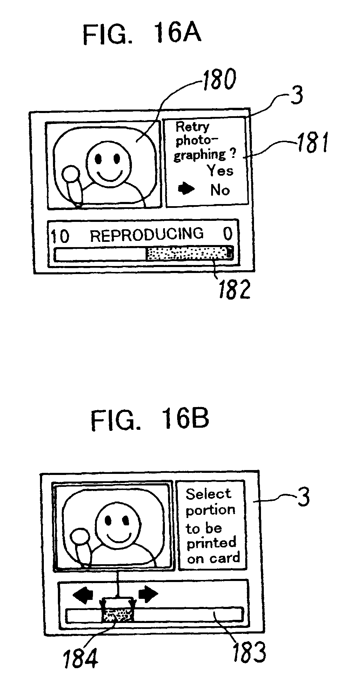

Then, according to the flowchart in Fig. 9, the image fetching is confirmed (step S5), and an obtained image 180 is reproduced on the screen 3. At this time, as is shown in Fig. 16A, a query is displayed to determine whether the operator desires to take a new photograph. When the operator indicates that a new photograph is desired, the image fetching process (step S4) is repeated (step S6). It is possible, in accordance with the program, for no query to be provided for the taking of a new photograph the next time the reproduction confirmation process is performed.

As is shown in Fig. 16B, at step S5 a range is designated for the fetching of images from among those which are obtained during a specific photograph period. That is, a scene position display bar 184 in a time belt 183 on the screen 3 is shifted so that positions having time intervals which correspond to six scenes during the photograph period can be freely shifted. The shifting of the scene position display bar 183 is performed using the input and confirmation buttons 5.

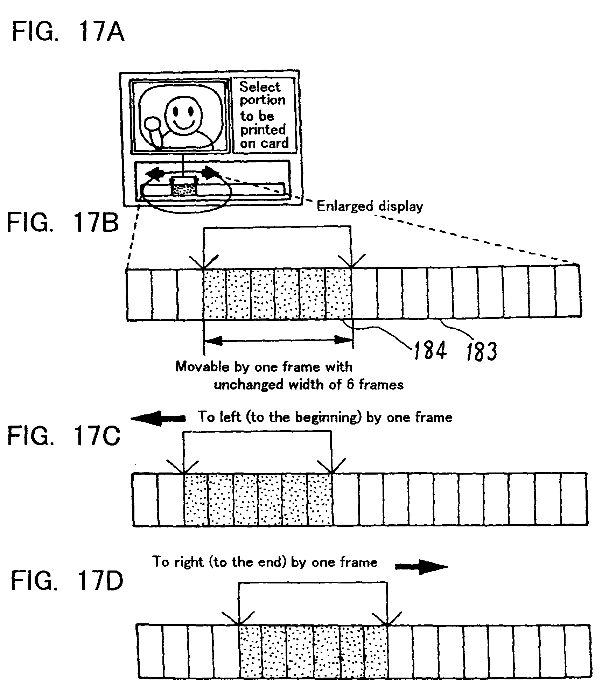

A more detailed explanation will be given for such arbitrary position shifting, of the time interval corresponding to the six scenes, while referring to Figs. 17A to 17D. The condition shown in Fig. 17A is the same as that in Fig. 16B, and in Fig. 17B an enlarged scene position display bar 183 is shown.

When the scene position display bar 184 for six scenes is shifted, as is shown in Fig. 17C or 17D, in the time belt 183 which depicts a predetermined photograph period, the desired six sequential scenes obtained during the photograph period can be specified, and the operator's favorite moving images can be selected.

When the six sequential scenes are selected, the moving image data for those six scenes are developed in the frame buffer 32 of the first VDP 30 by the CPU 21, and synthesization is performed with the frame data which are selected in advance by the second VDP 40, the resultant data being thereafter transmitted to the printer 13. The printer 13 arranges in alternate strips the image data for six scenes, as was explained while referring to Figs. 6A to 6D. The images are printed on the lenticular sheet 135 by using the printer 13 functions which were explained while referring to Figs. 7A, 7B and Fig. 8 (step S7 in Fig. 9).

When the printing has been completed, the resultant moving image card is discharged at the moving image card discharge port 8 (step S8).

In addition to the above described method for fetching six sequential scenes, which is depicted in Figs. 17A to 17D, the following two methods can be employed.

According to the first method, an operator depresses a shutter button, i.e., the input button, to specify the start frame position and the stop frame position in the time belt 183 in which is indicated a specific photograph time. The CPU 21 divides, by six, the interval specified by the start and the stop frame positions, and acquires six scenes to be fetched.

According to the second method, an operator employs a shutter button, i.e., the input button, to specify scenes at arbitrary positions in the time belt 183 which describes a predetermined photograph period, and acquires six scenes to be fetched.

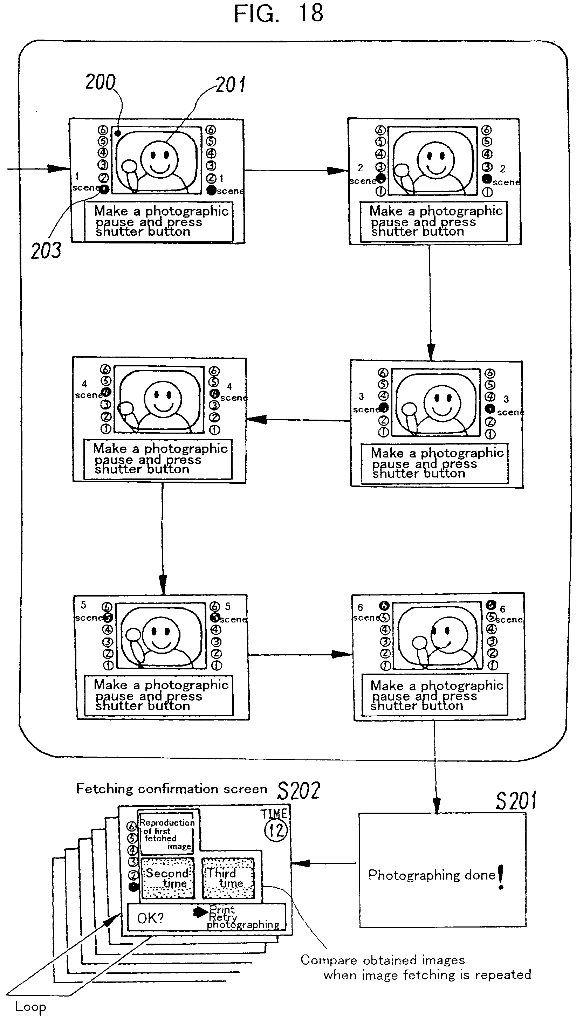

Fig. 18 is a diagram for explaining the image fetching process using the method corresponding to the display in Fig. 14B. At step S4 in the flowchart in Fig. 9, the operator depresses a shutter button each time he or she initiates a pause for the six scenes. At such time, the operator can confirm the pause 201 he or she initiated on the screen 3, which corresponds to each scene 200 of the selected frame, by depressing the shutter button (step S200).

In Fig. 18, a numeral 203 is displayed on the screen in order to confirm which scene is to be used of the six which are obtained one by one.

When the six scenes have been photographed, a photograph end message is displayed (step S201). In addition, the moving images which are fetched and which correspond to the pauses for the six scenes are confirmed (step S5 in Fig. 9). When the fetch repetition count is limited to three, the fetching at step S4 is repeated and the moving images are compared each time in order to select or confirm the moving images which are finally fetched (step S202). In Fig. 14C, as is described above, a series of movements can be repeated, for example, three times (for the time period for each repetition the count down: three seconds to go, two seconds to go, one second to go, is used for the photograph sequence), so that during this period the operator can practice initiating pauses and prepare for the actual photographing.

As a result, during the actual photographing, the operator can initiate appropriate pauses, in accordance with the movements of the boxing glove in the frame images in Figs. 11A to 11F, as though his or her face were being struck by the boxing glove.

In the above described embodiment, for the synthesization of a portrait of a person, such as an operator, with a frame image which is selected in advance, chroma key synthesization can be employed whereby a person is photographed with a blue background before synthesization of the image of the person with a desired scene is performed.

Furthermore, when an insertion terminal for a film memory for a digital camera is provided at a position (not shown) in the main body 1, instead of an image which is obtained by the camera 7, digital image data stored in the film memory can be transferred to the output terminal of the A/D converter in Fig. 3.

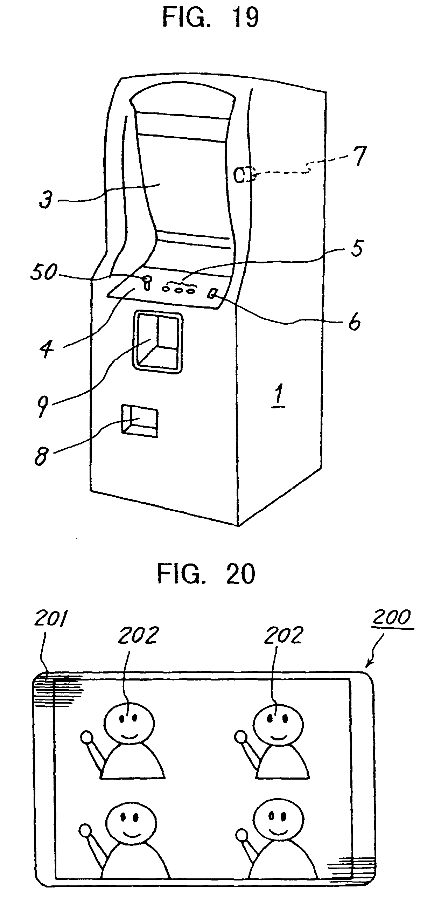

Fig. 19 is a perspective view of the external appearance of a moving image card generation apparatus according to a second embodiment of the present invention. Fig. 20 is a plan view of a moving image card according to the second embodiment. The moving image card generation apparatus includes a display screen 3, which is located in front of the upright case of a main body 1, and an operating panel 4 which is positioned below the screen 3. On the operation panel 4 are provided a coin slot 6, in which a fee can be inserted for the operation of the moving image card generation apparatus, and an operation button 5 and an operating lever which can be manipulated to generate a moving image card.

Continuing, a camera 7 is mounted inside the display screen 3, facing to the front. And a moving image card discharge port 8 is so located that when a moving image card 200, shown as an example in Fig. 20, is discharged it can be easily retrieved by an operator.

This arrangement is substantially the same as that in the first embodiment shown in Fig. 1, except that in the embodiment in Fig. 19, while taking into account the characteristic of the moving image card 200, a card insertion slot 9 is provided for accepting a moving image card 200 that is to be cut.

The moving image card in this embodiment is as large as a telephone card, and is made of ABS resin having a thickness of approximately 1 mm. The obverse surface of the moving image card 200 is covered by transparent lenticular lenses 201, and a plurality of images of a customer, i.e., a plurality of portraits 202 with accompanying moving background images, are printed on the reverse surface. Therefore, to an operator, these printed images appear to be animated when viewed through the lenticular lenses 201.

In many cases, a plurality of small images for which identical pauses are provided are printed on a single moving image card 200. Therefore, a customer who retrieves a moving image card 200 from the moving image card discharge port 8 can subdivide the moving image card 200 into small sheets corresponding to individual small images 202 and obtain a plurality of seals. As was previously described, however, since a moving image card 200 is 1 mm thick its subdivision into separate images is not easily accomplished. And so, as an option, a moving image card generation program can be so set that either a single, large image or a plurality of small images can be printed on the moving image card 200.

Therefore, the second embodiment of the present invention is characterized by the provision of a cut forming device inside the apparatus 1 for cutting a moving image card 200, so that a customer can easily separate the moving image card 200 into the pieces that comprise it.

The card insertion slot 9, along with the moving image card discharge port 8, is located in the front of the main body 1, so that the moving image card 200 can be readily inserted when a customer desires that it be cut. When the customer inserts the moving image card 200 into the card insertion slot 9, as will be described later, cuts are made in it and it is again discharged. As a result, by subdividing the moving image card 200 along the cuts, a plurality of seals can be obtained.

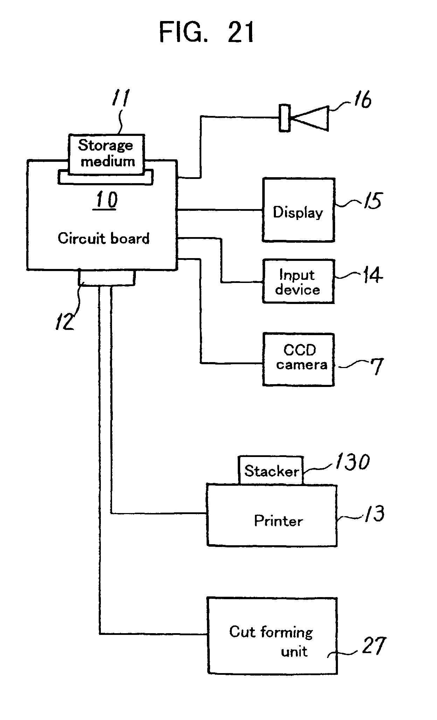

Fig. 21 is a block diagram illustrating the internal arrangement of the moving image card generation apparatus in Fig. 19. The basic structure is the same as was explained for Fig. 2, except that a cut forming device 27 is connected to a circuit board 10 to form cuts in the moving image card 200 so that it can be subdivided into a plurality of seals.

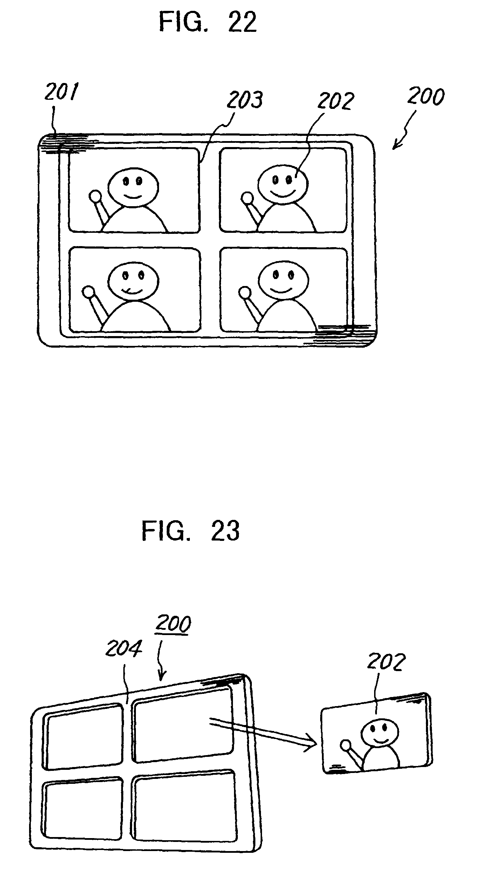

With the cut forming device 27, as is shown in the plan view in Fig. 22 a moving image card 200 can be obtained in which cuts 203 are formed. In Fig. 22, a transparent lenticular lens 201 is formed on the obverse surface of the moving image card 200, while small images 202, such as portraits of a customer, are printed on four segments on the reverse surface, in the same manner as was explained while referring to Figs. 6A to 6D.

Substantially rectangular cuts 203 having rounded corners are formed around the small images 202. Fig. 23 is a diagram for explaining how the small images 202 are separated from the moving image card. When a section of the moving image card 200 on which one of the four small images 202 is printed is held by one hand while the edge of the moving image card 200 is held by the other hand, and the section on which the small image 202 is printed is twisted, the section is separated from the moving image card 200 along the cut 203. In this manner, a frame 204, constituting the moving image card 200, and the sections on which the small images 202 are printed can be easily separated, without the sections on which the small images 202 are printed being damaged.

Cuts 203 in the moving image card 200 can be simultaneously formed at corresponding locations in both the obverse and the reverse surfaces, or a cut 203 can be formed in either the obverse surface or the reverse surface. When cuts 203 are formed at corresponding locations in two surfaces, grooves can be so cut in the obverse and reverse surfaces of an approximately 1 mm thick moving image card 200 that midway between the two surfaces there is an approximately 0.1 mm thick uncut portion.

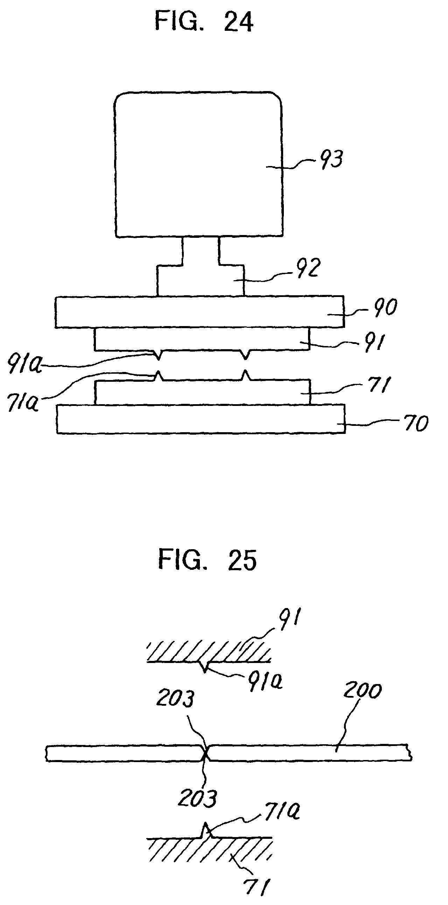

Fig. 24 is a schematic side view of an example cut forming device 27 for performing the cut forming function and making cuts 203 in a moving image card 200, showing in particular a cut forming unit for simultaneously forming cuts 203 at corresponding locations in both the obverse surface and the reverse surface of the moving image card 200.

A lower blade square plate 71 and an upper blade square plate 91 are respectively mounted facing each other on a square flat plate 70 and a square pressing plate 90. On the lower blade square plate 71 and the upper blade square plate 91, opposed lower blades 71a and upper blades 91a are respectively provided. A pressing member 92 is coupled with the square pressing plate 90, and pressure is applied to the pressing member 92 by a hydraulic cylinder 93.

When a moving image card 200 is placed between the upper blades 91a and the lower blades 71a, the pressing member 92, impelled by the pressure exerted by the hydraulic cylinder 93, pushes the upper blades 91a down towards the lower blades 71a. As a result, as is shown in Fig. 25, cuts 203 are formed in the moving image card 200 in both the obverse and the reverse surfaces, while an approximately 0.1 mm thick uncut portion is retained in the middle of the moving image card 200.

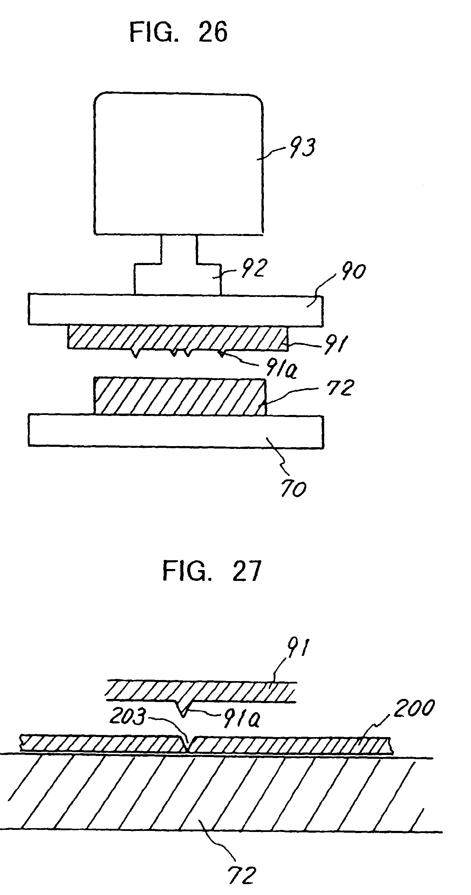

Fig. 26 is a schematic side view of another example cut forming device 27 for performing the cut forming function and forming cuts 203 in a moving image card 200, showing in particular a cut forming unit for forming cuts 203 in either the obverse surface or the reverse surface of the moving image card 200.

As in the example in Fig. 24, a square flat plate 70 and a square pressing plate 90 are provided, and an upper blade square plate 91 is positioned between them. But instead of the square lower blade plate 71 in Fig. 24, a blade spacer 72 is provided on the square flat plate 70. The blade spacer 72 is a spacer block which is formed of 66 nylon.

When a moving image card 200 is placed between the upper blades 91a and the blade spacer 72, the pressing member 92, driven by the pressure exerted by the hydraulic cylinder 93, pushes the upper blades 91a down towards the blade spacer 72. As a result, as is shown in Fig. 27, cuts 203 are formed in the obverse surface of the moving card 200 by the upper blades 91a, while an approximately 0.1 mm thick uncut portion is retained adjacent to the lower surface of the moving image card 200.

The remaining 0.1 mm thick uncut portion of the moving image card 200 in Fig. 24 or 26 is defined by bringing a stopper (not shown in Figs. 24 and 26) into contact with the square pressing plate 90 and thus inhibiting its movement, so that the upper blades 91a and the lower blades 71a (in Fig. 24), and the upper blades 91a and the blade spacer 72 (Fig. 26) do not come nearer than 0.1 mm.

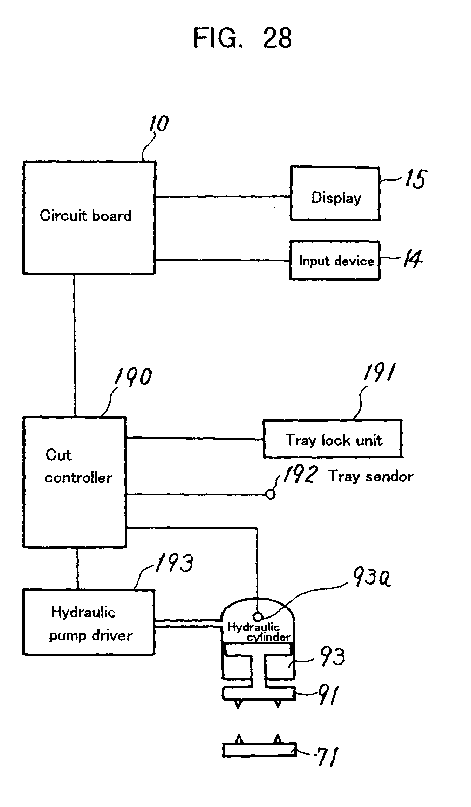

Fig. 28 is a block diagram illustrating an example control system for the cut forming device 27. A cut controller 190, which is connected to the circuit board 10, is connected to a tray lock unit 191 for securing to the cut forming unit shown in Fig. 24 or 26 a card tray on which is mounted a moving image card, which was previously inserted into the card insertion slot 9,

The tray lock unit 191 uses a solenoid coil to lock or unlock the card tray, thus inhibiting or permitting its movement, and the cut controller 190 employs a signal it receives from a tray sensor 192 to determine whether or not the card tray is positioned at the cut forming unit.

A hydraulic pump driver 193 for controlling the operation of a hydraulic system is also connected to the cut controller 190. The hydraulic pump driver 193 controls the forward and backward rotation of a motor for a hydraulic pump, which in turn controls the operation of the hydraulic cylinder 93, so that as in the previously mentioned example in Fig. 25, the upper blade square plate 91 can be pressed downward toward the lower blade square plate 71.

An upper limit sensor 93a is provided for the hydraulic cylinder 93 for detecting the point at which the cylinder 93 has been fully retracted. The upper limit sensor 93a transmits a detection signal to the cut controller 190 to perform the feedback control for the hydraulic cylinder 93, so that no further pressure is exerted on the upper blade square plate 91. It can be easily understood that the arrangement used for the control system of the cut forming unit in Fig. 28 can also be employed to form a cut using a single blade, as in Fig. 26.

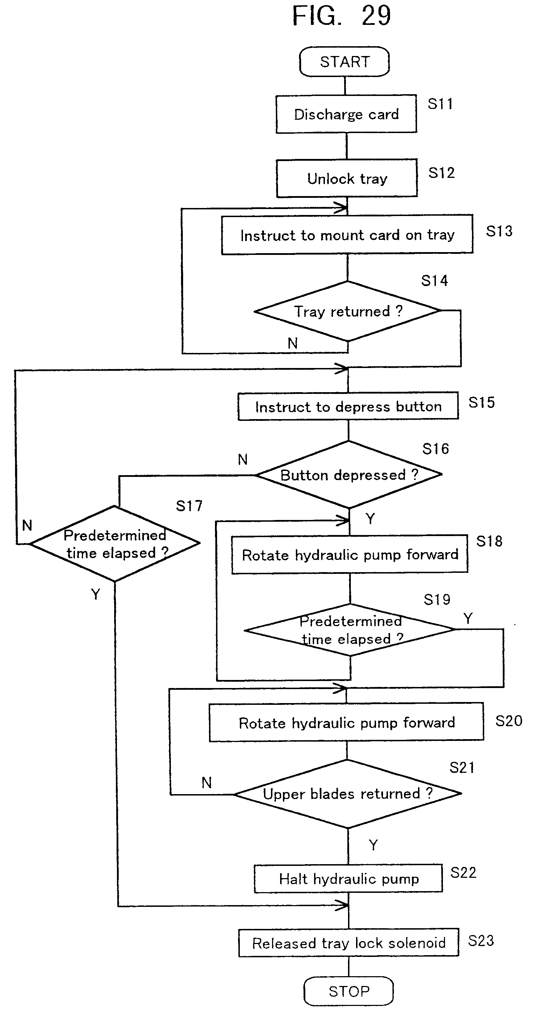

Fig. 29 is a flowchart showing the processing performed by the cut forming device 27. The processing will be explained while referring to the block diagram of the control system for the cut forming device 27 in Fig. 28. First, using the moving image card generation apparatus, a customer completes the photographic process for obtaining portraits and then employs the operating button 5 on the operating panel 4 to select the printing on a moving image card 200 of four images corresponding to one of the portraits which were obtained.

In accordance with the selection, four small copies of the obtained image are printed on the moving image card 200, which is then discharged to the moving image card discharge port 8 shown in Fig. 19 (step S11). At this time, the card tray, which has been unlocked by the tray lock unit 191 under the control of the cut controller 190, is positioned at the rear of the card insertion slot 9. Since the card tray is pushed forward by a conston spring, when it is unlocked the card tray projects outward beyond the entrance of the card insertion port 9 (step S12).

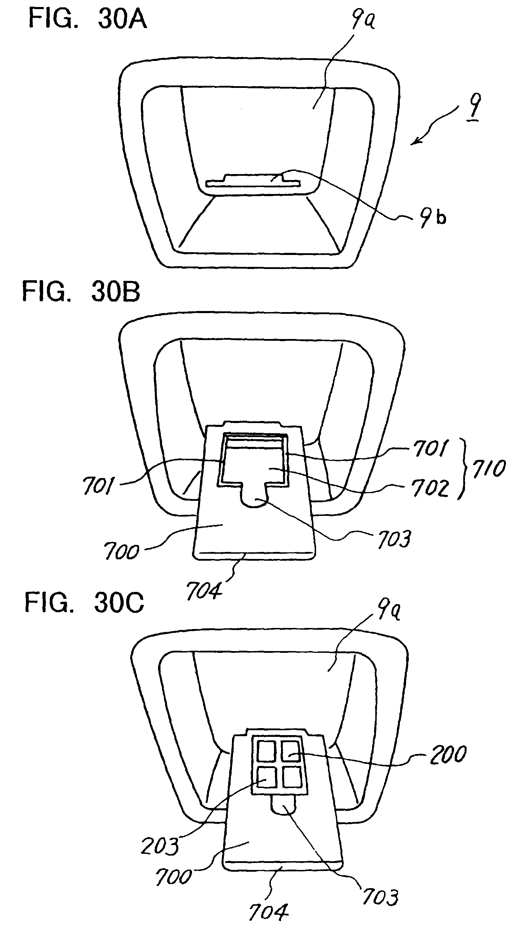

The relationship that exists between the card insertion port 9 and a card tray 700 can be understood by referring to Figs. 30A to 30C, wherein only the external appearance at the card insertion slot 9 is shown. In Fig. 30A is shown the state where the card tray 700 is stored inside a convex opening 9b which is positioned at the rear of a face opening 9a of the card tray insertion port 9, i.e., the state where the card tray 700 is positioned at the cut forming unit of the cut forming device.

In Fig. 30B is shown the state where the card tray 700, after being unlocked, projects outward beyond the card insertion port 9. A card mounting portion 710 of the moving image card 200 is formed in the card tray 700 by using the difference in the heights of an opening edge 701 of a square opening 702 and the surface of the card tray 700, so that the moving image card 200 can be precisely mounted on the card tray 700.

In Fig. 30C is shown the state where the moving image card 200 is fitted into the card mounting portion 710 of the card tray 700, and a U-shaped opening 703 which is formed in front of the card mounting portion 702 so that a customer can easily extract a moving image card 200 from the card tray 700 by inserting his fingers into the U-shaped opening 703 and gripping the edge of the moving card 200.

Referring again to Fig. 29, when the card tray 700 is unlocked (step S12) and projects outward beyond the card insertion port 9, a guidance message displayed on the screen 3 of the display 15 instructs a customer to extract the moving image card 200 from the moving card discharge port 8 and to mount it in the card mounting portion 710 of the card tray 700, which projects outward beyond the card insertion port 9 (step S13).

When a customer mounts the moving image card 200 in the card mounting portion 710 of the card tray 700 and pushes the front end 704 of the card tray 700 toward the opening face 9a of the card insertion port 9, the card tray 700 is loaded into the opening 9a of the card insertion port 9 against the force exerted by the conston spring (not shown in Figs. 30A to 30C).

When the card tray 700 is locked by the tray lock unit 191, the tray sensor 192 detects this activity and transmits a detection signal to the cut controller 190. Upon receiving this signal, the cut controller 190 acknowledges that the card tray 700 has been is returned to the cut forming unit (step S14). If the return of the card tray 700 is not detected, display of the message displayed at step S13 is continued.

When the return of the card tray 700 has been detected, a message is displayed on the screen 3 of the display 15 instructing the depression of a button to start the cutting. Therefore, the customer is aware that the moving image card is being divided into four pieces (step S15).

When the customer depresses the button 5 of the input device 14 indicating that she desires that cuts be formed (step S16), a signal generated upon the depression of the button is transmitted via the circuit board 10 to the cut controller 190, which transmits in turn a drive signal to the hydraulic pump driver 193. If the customer does not depress the button 5, the message instructing the depression of the button 5 continues to be displayed until a specific period of time has elapsed (step S17).

When the predetermined period of time has elapsed, it is assumed that the customer does not desire cuts to be made in the moving image card 200 and the tray lock solenoid is released. Thus, the card tray 700 is moved back to the card insertion port 9 for the return of the moving image card to the customer. The processing is thereafter terminated (step S23).

The hydraulic driver 193 rotates the hydraulic pump forward to cause the hydraulic cylinder 93 to descend (step S18). This operation is continued until a predetermined period of time has elapsed (step S19). During this operation, the upper blades 91a approach the lower blades 71a or the blade spacer 72.

When the hydraulic cylinder 93 continues to descend for a predetermined period of time, a moving image card 200 is pressed between the upper blades 91a and the lower blades 71a (in Fig. 24), or between the upper blades 91a and the blade spacer 72 (in Fig. 26). A maximum pressure of 70 kg/cm² is imposed on the moving image card 200, and cuts 203 are formed in both the upper and the lower surfaces of the moving image card 200 (Fig. 24), or in only the upper surface (Fig. 26).

When at step S19 the predetermined period of time has elapsed, the hydraulic pump driver 193 causes the hydraulic pump to rotate backward and raises the cylinder 93 (step S20). The reverse rotation of the hydraulic pump is continued until the upper limit sensor 93a detects the upper limit of the cylinder 93 (step S21). As a result, the upper blades 91a are returned to the upper limit and the hydraulic pump is halted (step S22).

After the cuts 203 have been formed in the moving image card 200, the cut controller 190 releases the tray lock unit 191 and disengages a pawl attached to the solenoid coil from the card tray 700, which is then projected outward from the card insertion port 9 by the force exerted by the conston spring, as is shown in Fig. 30C (step S23).

Thereafter, the customer removes the moving image card 200 in which the cuts 203 are formed from the card mounting portion 702 of the card tray 700, and the series of processes performed by the cut forming device is terminated.

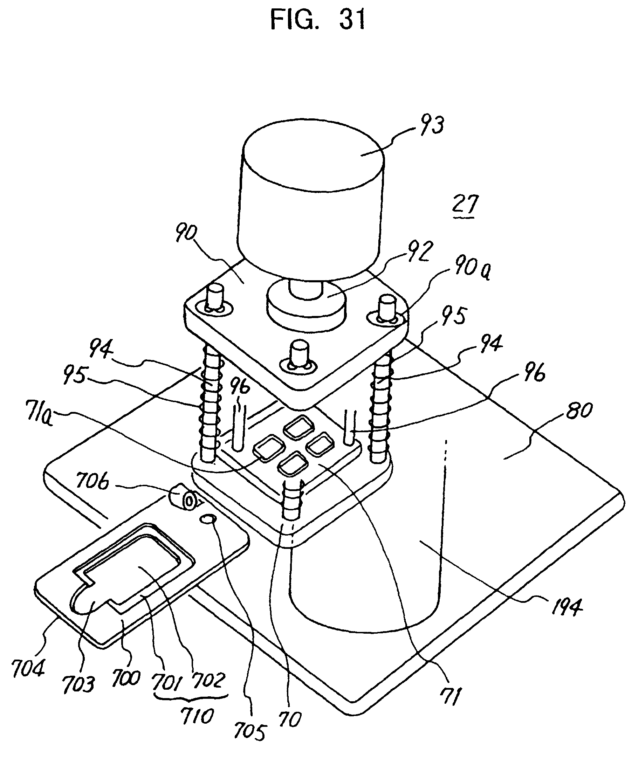

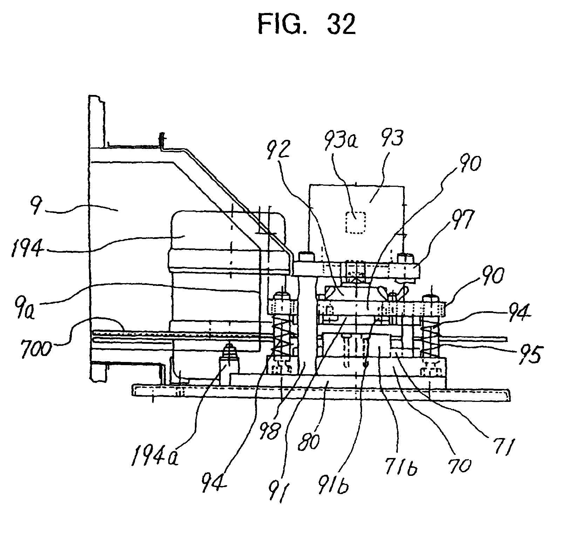

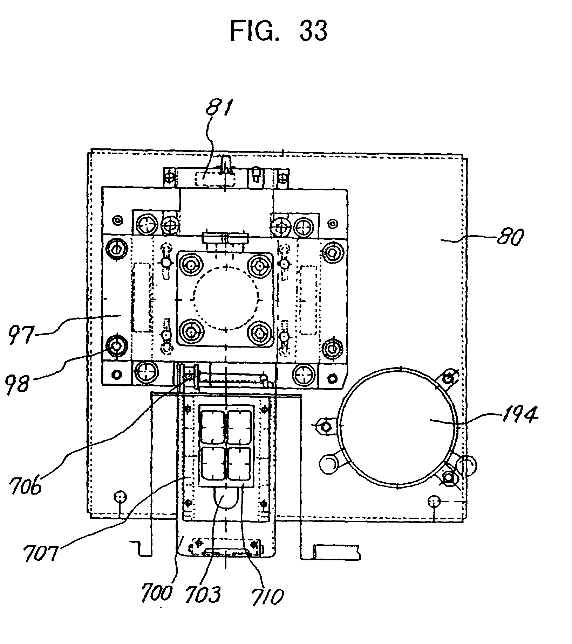

Fig. 31 is a partially simplified, perspective view of the outline of the mechanism of the cut forming device 27 according to the embodiment in Fig. 24 which has been removed from the main body 1 of the moving image card apparatus. Figs. 32 to 34 are a side view, a top view, and a front view of the mechanism in Fig. 31.

The cut forming device 27 is provided to the rear of the card insertion port 9 and inside the main body 1 of the moving image card generation apparatus. The opening 9b, which has a horizontally elongated, vertically shortened convex shape is formed in the lower portion of the opening face 9a at the rear wall of the card insertion port 9 (see Fig. 30A). As is shown in Figs. 30B and 30C, the rectangular card tray 700 can be horizontally shifted from the opening 9b to the front of the main body 1.

The square opening 702 is formed in the card tray 700. The small opening edge 701 is formed so that its upper portion is as large as the outer size of the moving image card 200 and its lower porion is smaller than the outer size of the moving image card 200, thus facilitating the mounting of the moving image card 200 thereon. The opening 702 and the opening edge 701 together constitute the card mounting portion 710.

Therefore, the moving image card 200 can be precisely mounted in the card mounting portion 710 by using the difference in the height of the surface of the card tray 700 and the opening edge 701.

Also, the U-shaped opening 703 is formed in front of the card mounting portion 710, and this opening makes it possible for a customer to easily remove the moving image card 200 from the card tray 700 by inserting his or her fingers and grasping the edge of the moving card image 200.

Referring to Fig. 32, located at the rear of a base 80 in the cut forming device 27 is a cut forming unit for forming cuts in the moving image card 200. The cut forming unit includes the upper blades 91a and the lower blades 71a with which cuts are formed in both the upper and lower sides of a moving image card 200 which is mounted on the card mounting portion 710 of the card tray 700. Therefore, to form cut, the card tray 700 is internally moved to the rear until the front end face 704 of the card tray 700 corresponds to the opening 9b of the card insertion slot 9.

In the cut forming unit, struts 94 are provided at the four corners of the square plate 70 which is fixed to the base 80, and a spring 95 is wound around each of the struts 94. The lower blade square plate 71 is fixed to the area enclosed by the struts 94.

Struts 96 are provided at the four corners of the square lower blade plate 71. The four square lower blades 71a are attached to the square lower blade plate 71 so as to correspond to four small images printed on the moving image card 200.

In Fig. 31, the corresponding upper blades 91a are hidden. The square pressing plate 90 corresponding to the square flat plate 70 is attached on the upper blade side, and the struts 94 pass through the top face of the plate 90 at the four corners and are secured by E washers 90a so that the plate 90 will not to slip off.

The square pressing plate 90, through which the struts 94 pass at the four corners, is constantly forced upward by the springs 95 which are wound around the struts 94. Therefore, the square pressing plate 90 slides vertically along the struts 94.

Upright struts 96 are also provided at the four corners of the lower blade square plate 71. The upper blade square plate 91 is attached to the bottom of the square pressing plate 90 on the upper blade side, and the struts 96 pass through the upper blade square plate 91 which correspond to the lower blade square plate 71. As a result, the upper blade square plate 91 can be pushed down while facing the lower blade square plate 71.

The stoppers 91b are provided on both sides of the square pressing plate 90, and stopper receiving members 71b are secured on both sides of the square flat plate 70 which corresponds to the stoppers 91b. when the stopper receiving members 71a contact the stoppers 91b, the upper blades 91a and the lower blades 71a, which are respectively provided on the upper and lower blade square plates 91 and 71, face each other with a slight gap between them, so that the blades do not contact each other.

The hydraulic cylinder 93 is attached facing downward to a bracket 97 above the square pressing plate 90, and the bracket 97 is attached to the base 80 by device of a strut 98. The pressing member 92 is attached to the distal end of the hydraulic cylinder 93, and contacts the top face of the square pressing plate 90. Since the square pressing plate 90 is constantly forced upward by the springs 95, it is constantly in contact with the pressing member 92.

As a drive source for the hydraulic pump 93, a substantially cylindrical hydraulic pump 194 is attached to the base 80 by a vibration prevention rubber 194a. The hydraulic cylinder 93 is operated by the hydraulic pump 194. A motor (not shown) is incorporated in the hydraulic pump 194, and is rotated forward or backward to extend or retract the hydraulic cylinder 93 which passes through a pipe (not shown).

The upper limit sensor 93a is provided for the hydraulic cylinder 93 to detect the limit of the contraction of the cylinder 93. When the upper limit sensor 93 detects the fully retracted state of the hydraulic cylinder 93, it outputs a detection signal.

The card tray 700 is moved horizontally between the upper blades 91a and the lower blades 71a from the card insertion port 9 to the rear of the main body 1. One end of the conston spring 706 is connected to the rear end of the card tray 700 to force it forward. In addition, an engagement portion 705 is provided at the rear of the card tray 700.

A solenoid coil 81 is attached to the bracket 97 at the rear of the cut forming unit to lock the forward and backward movement of the card tray 700 at the position where the front end face 704 of the card tray 700 corresponds to the opening 9b. A pawl is so controlled that it engages the engagement portion 705 of the card tray 700 and locks the card tray 700. When the solenoid coil 81 is rendered conductive, the pawl is disengaged from the engagement portion 705.

Then, the card tray 700 is unlocked, and is projected outward from the opening 9b to the card insertion port 9 by the conston spring 706, which is connected to the rear of the card tray 700.

The card tray 700 is so attached, by a slide holding member 707 which holds both sides of the card tray 700, that the it slides forward and backward and is pushed slightly upward.

Since the card tray 700 is pushed slightly upward by the slide holding member 707, when the upper blades 91a of the upper blade square plate 91 in the cut forming unit press the moving image card 200 down on the card mounting portion 710, at the same time the card tray 700 is also pushed down slightly.

Therefore, as the upper blades 91a descend the moving image card 200 is pressed downward with the card tray 700 until the lower face of the moving image card 200 contacts the lower blades 71a.

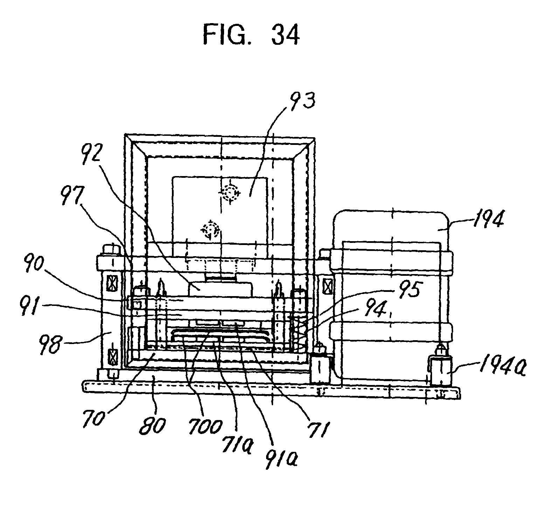

In Fig. 34 a solid line and a chained line are used to show the downward movement of the card tray 700. The solid line is used to indicate the state where the card tray 700 at the top, and the chained line is used to indicate the state where it is at the bottom.

When the card tray 700 is loaded through the card insertion port 9 to position the moving image card 200 at the cut forming unit, the moving image card 200 does not rub against the upper blades 91a or the lower blades 71a, and a cut can be precisely formed in the moving image card 200.

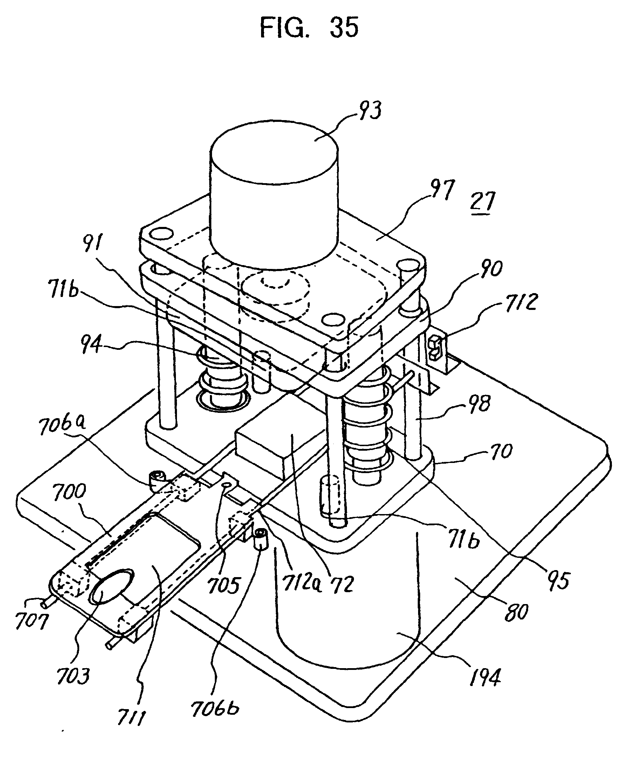

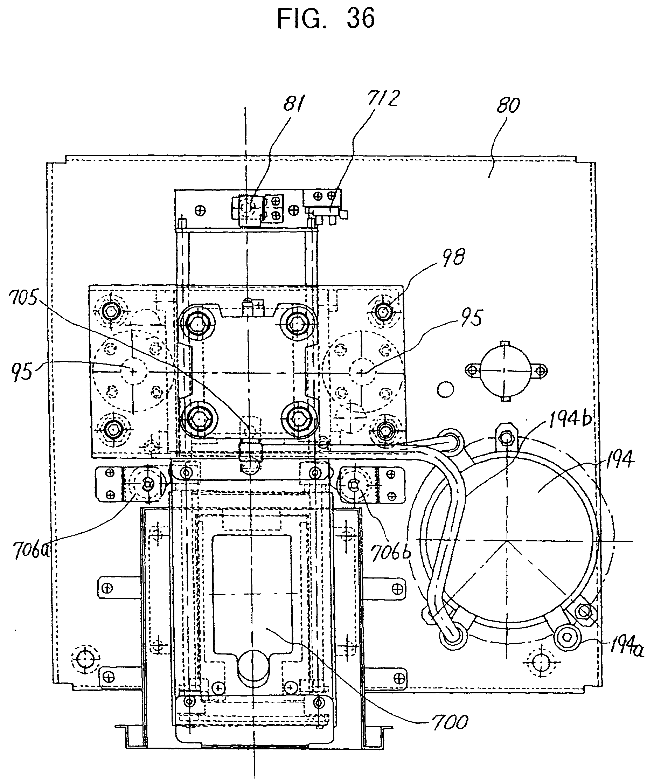

Fig. 35 is a partially simplified perspective view of the outline of the mechanism of the cut forming device 27 in Fig. 26, which has been is removed from the main body 1 of the moving image card generation apparatus. Fig. 36 is a top view of the mechanism in Fig. 35.

Since the basic structure is the same as that in Fig. 31, only the features that differ will be described.

For the mechanism in Fig. 26, instead of the lower blade square plate 71, the blade spacer 72 is provided for the square flat plate 70. Furthermore, struts 98 of a plunger 97, which secures a hydraulic cylinder 93, are located upright at the four corners of the square flat plate 70. In addition, the struts 98 pass through the square pressing plate 90, which slides vertically along the struts 98.

According to the structure in Fig. 31, upward pressure is exerted on the square pressing plate 90 by the springs 95 wound around the struts 94; and in Fig. 35, to complement this function, two struts 94 around which are wound springs 95 are provided between the square flat plate 70 and the square pressing plate 90. In addition, stopper struts 71b are provided upright on the square flat plate 70 to control the position to which the square pressing plate 90 is pushed down.

In addition, the mechanism in Fig. 35 has a feature related to the structure of the card tray 700. The card mounting portion 710 is not constituted by the opening edge 701 and the opening 702, but is formed as a recessed portion 711 into which the moving image card 200 is fitted.

The bottom of the recessed portion 711 is made of a polycarbonate plastic plate which is several mm thick.

As previously described while referring to Fig. 27, the bottom plastic plate of the recessed portion 711 serves as the blade spacer 72, and the moving image card 200 is mounted on the plastic bottom of the recessed portion 711.

The upper blades 91a descend a distance which exceeds more thickness of the moving image card 200 and form 0.1 to 0.3 mm deep cuts in the plastic bottom of the recessed potion 711. At this time, the portions of the moving image card 200 which contact the upper blades 91a are not completely cut through, but are elastically deformed with an approximately 0.1 mm thick connective portion remaining.

Since the plastic bottom of the recessed portion 711, which is the blade spacer 72, is cut by the upper blades 91a, deterioration of the upper blades 91a occurs when they have been are used many times. Taking this deterioration into consideration, in the example in Fig. 35, the blade spacer 72, which is the plastic bottom of the recessed portion 711, can be replaced.

Furthermore, instead of the conston spring 706 in Fig. 31, on the sides of the card tray 700 are located a pair of conston springs 706a and 706b. Therefore, both sides are balanced so that the card tray 700 slides more smoothly.

In Fig. 36, a pipe 194b along which pressure oil is fed is located between the hydraulic pump 194 and the hydraulic cylinder 93.

In addition, the solenoid coil 81 and a photosensor 712 are located at the rear. When the solenoid is rendered conducive/non-conductive, a pin which is driven by electromagnetic force engages or disengages an engagement hole 705 in the rear portion of the card tray 700. The electrification and de-electrification of the solenoid coil 81 is performed at a timing whereat whether the card tray 700 is positioned at the cut forming unit is determined upon the detection by the photosensor 712 of a projection 712a on the rear portion of the card tray 700.

A device for forming cuts in a moving image card 200 has been employed as the cut forming device 27 of the present invention. However, the cut forming device 27 can be applied not only for a card on which moving images are printed, but also for a card on which a plurality of static character images, including photographic images, are printed.

Furthermore, in the above embodiments, the cut shape of an image seal is substantially rectangular. However, the cut can be shaped as an oblong or it can be heart shaped. And although the cutting for a moving image card made of synthetic resin has been explained, the present invention can be applied for a card composed of thick paper.

### INDUSTRIAL USABILITY

As is described in the above embodiments, a plurality of moving image frames are set in advance in the present invention. An operator can select one of these frames and can insert moving images which are photographed. Therefore, an apparatus is provided for generating a moving image card which can build more interest and draw more customer attention than can conventional seals on which only static images are printed.

According to the present invention, provided are a cut forming device, which can print images on small sections of a card and can form cuts in the card so that an operator can easily separate the individual sections, and a moving image card generation apparatus incorporating such a device.

By mounting a card having a predetermined shape on a card tray, the cut forming device can form cuts in the card so that an operator can easily separate from the card images which lye within the limits of designated ranges.

Therefore, any customer can separate the individual sections on which are printed images, and the usability to the customer of the moving image card generation apparatus can be improved.

The above described embodiments are employed only for explaining the present invention, and the present invention is not limited to these embodiments. The protective scope of the present invention is defined by claims, and the equivalent of the range of the claims is also included within the protective scope of the present invention.

## Claims

1. A moving image card generation apparatus comprising:
storage media storing a program for generating a moving image card and moving image data for a plurality of frames;
input device with which an operator selects and inputs image data for one of said plurality of frames;
digital image generator;
control device reading said program for generating a moving image card from said storage media and executing said program, and synthesizing an image generated by said digital image generator with a plurality of scenes, which constitutes said image data for said selected frame, to create synthesized images for said plurality of scene images; and
output device forming into strips said synthesized images for said plurality of scenes and alternately arranging said strips on the reverse surface of a lenticular lens to create said moving image card.

2. A moving image card generation apparatus according to claim 1, wherein said output device includes a printer for printing, directly on said reverse surface of said lenticular lens, said strips of said synthesized images for said plurality of scenes which are alternately arranged.

3. A moving image card generation apparatus according to claim 1, wherein said output device prints said strips of said synthesized images for said plurality of alternately arranged scenes on a specific sheet, and aligns the resultant sheet with said reverse surface of said lenticular lens to create said moving image card.

4. A moving image card generation apparatus according to claim 1, wherein said digital image generator is a photographic camera provided for said main body of said moving image card generation apparatus.

5. A moving image card generation apparatus according to claim 1, wherein said digital image generator is a storage media in which are stored image data obtained by a digital camera which is separately provided apart from said main body of said moving image card generation apparatus.

6. A moving image card generation apparatus according to claim 1, wherein images which said control device synthesizes with said selected frame image having said plurality of scenes are those in a time interval equivalent to that for sequential scenes which are specified by said operator and which correspond to said plurality of scenes selected from among said images generated by said digital image generator during a predetermined time period.

7. A moving image card generation apparatus according to claim 1, wherein images which said control device synthesizes with said selected frame image having said plurality of scenes are those which correspond to said plurality of scenes selected from among said images which are generated by said digital image generator during a predetermined time period and which are included in a period extending from a start frame to a stop frame specified by said operator.

8. A moving image card generation apparatus according to claim 1, wherein an image which said control device synthesizes with said selected frame moving image having said plurality of scenes is an image for an arbitrary scene which is specified by said operator and which corresponds to said plurality of scenes selected from among said images which are generated by said digital image generator device during a predetermined time period.

9. A moving image card generation apparatus according to claim 4, wherein an image which said control device synthesizes with said selected frame image having said plurality of scenes is an image obtained by said photographic camera for each of the scenes which correspond to said plurality of selected scenes.

10. A moving image card generation apparatus according to claim 9, wherein said images obtained for said scenes which correspond to said plurality of selected scenes are sequentially reproduced to confirm moving images.

11. A moving image card generation apparatus according to claim 1, wherein said storage media storing said program for generating said moving image card and said image data for said plurality of frames is a memory cartridge which is detachably provided for said moving image card generation apparatus.

12. A storage medium in which are stored image data for a plurality of frames and a program for generating a moving image card for a moving image card generation apparatus,comprising:
input device with which an operator selects and inputs image data for one of said plurality of frames;
photographing device;
control device executing said program for generating a moving image card and for synthesizing an image obtained by said photographing device with the frame having a plurality of scenes which is selected by said input device and for generating synthesized images for said plurality of scenes; and
a printer forming into strips said synthesized images for said plurality of scenes and for alternately printing said strips on the reverse surface of a lenticular lens.

13. A cut forming device comprising:
a card tray on which a card having a predetermined shape is mounted;
a cut forming unit having cutting blades; and
a control unit detecting the insertion of said card tray into said cut forming unit and cutting said card mounted on said card tray by moving said cutting blades nearer each other than a distance equivalent to the thickness of said card.

14. A cut forming device according to claim 13, wherein said cutting blades include an upper blade and a lower blade which face each other vertically.

15. A cut forming device comprising:
a card tray on which a card having a predetermined shape is mounted;
moving device moving said card tray from a predetermined position;
lock device fixing said card tray moved by said moving device;
cut forming device moving blades to said card, which is on said card tray secured by said locking device, at a distance shorter than the thickness of said card, and for forming a cut in said card; and
unlocking device moving said blades from said card after said card is cut by said cut forming device, and for releasing said card tray from said locking device and returning said card tray to said predetermined position.

16. A cut forming device according to claim 15, wherein said blades of said cut forming device consist of upper blades and lower blades which face each other above and below said card mounted on said card tray, and wherein said cut forming device moves said upper blades and lower blades closer from both sides of said card on said card tray to form a cut in said card.

17. A cut forming device according to claim 16, wherein the shortest distance from said upper blade to said facing lower blade of said cut forming unit, with said card mounted on said card tray positioned in between, is approximately 0.1 mm.

18. A moving image card generation apparatus according to claim 1, further comprising a cut forming device, which includes:
a card tray on which a card having a predetermined shape is mounted;
a cut forming unit having cutting blades; and
a control unit detecting the insertion of said card tray into said cut forming unit and cutting said card mounted on said card tray by moving said cutting blades nearer each other than a distance equivalent to the thickness of said card.

19. A moving image card generation apparatus according to claim 18, wherein said cutting blades comprise an upper blade and a lower blade which face each other vertically.

20. A moving image card generation apparatus according to claim 18, wherein said control unit includes query display unit, after said card tray is moved by said moving device and fixed by said lock device, inquiring a customer as to whether a cut is to be formed in said card.

21. A moving image card generation method comprising the steps of:
storing a program for generating a moving image card and moving image data for a plurality of frames;
selecting and inputting image data for one of said plurality of frames to generate a digital image;
reading said program for generating said stored moving image card and executing said program, and synthesizing an image generated by digital image generator with a plurality of scenes, which constitutes said image data for said selected frame, to create synthesized images for said plurality of scene images; and
forming into strips said synthesized images for said plurality of scenes and for alternately arranging said strips on the reverse surface of a lenticular lens to create said moving image card.

22. A moving image card generation method according to claim 21 further comprising the steps of:
mounting a card having a predetermined shape on a card tray;
detecting the insertion of said card tray into a cut forming unit having cutting blades; and
cutting said card mounted on said card tray by moving said cutting blades nearer each other than a distance equivalent to the thickness of said card.

23. A moving image card generation method according to claim 22, wherein said cutting blades comprise an upper blade and a lower blade which face each other vertically.
